(19) **Europäisches Patentamt / European Patent Office / Office européen des brevets**

(11) **EP 1 873 537 B1**

(12) **FASCICULE DE BREVET EUROPEEN**

(45) Date de publication et mention
de la délivrance du brevet:
**16.02.2011 Bulletin 2011/07**

(51) Int Cl.:
*G01R 31/30* (2006.01)   *G06F 21/00* (2006.01)
*G11C 16/22* (2006.01)   *G06K 19/073* (2006.01)
*G01R 19/165* (2006.01)   *G01R 31/317* (2006.01)

(21) Numéro de dépôt: **07109751.3**

(22) Date de dépôt: **06.06.2007**

(54) **Détection de type de détecteur de pics parasites dans l'alimentation d'un circuit intégré**

Ermittlung des Typs eines Detektors von Störungspeaks für die Stromzufuhr zu einem integrierten Schaltkreis

Detection of type of detector of disturbance peaks in the power supply of an integrated circuit

(84) Etats contractants désignés:
**DE FR GB IT**

(30) Priorité: **29.06.2006 FR 0652713**

(43) Date de publication de la demande:
**02.01.2008 Bulletin 2008/01**

(73) Titulaire: **ST MICROELECTRONICS S.A.**
**92120 Montrouge (FR)**

(72) Inventeurs:
• **Malherbe, Alexandre**
  **13530, TRETS (FR)**
• **Duval, Benjamin**
  **83470, SAINT-MAXIMIN (FR)**

(74) Mandataire: **de Beaumont, Michel**
**1bis, rue Champollion**
**38000 Grenoble (FR)**

(56) Documents cités:
**FR-A1- 2 557 703**   **US-A1- 2002 186 038**
**US-A1- 2003 101 016**   **US-A1- 2003 226 082**

**Description**

Domaine de l'invention

La présente invention concerne, de façon générale, les circuits électroniques et, plus particulièrement, la détection de perturbations accidentelles ou volontaires dans l'alimentation d'un circuit électronique. L'invention s'applique plus particulièrement à la qualification d'un circuit électronique pourvu d'un détecteur de telles perturbations.

Exposé de l'art antérieur

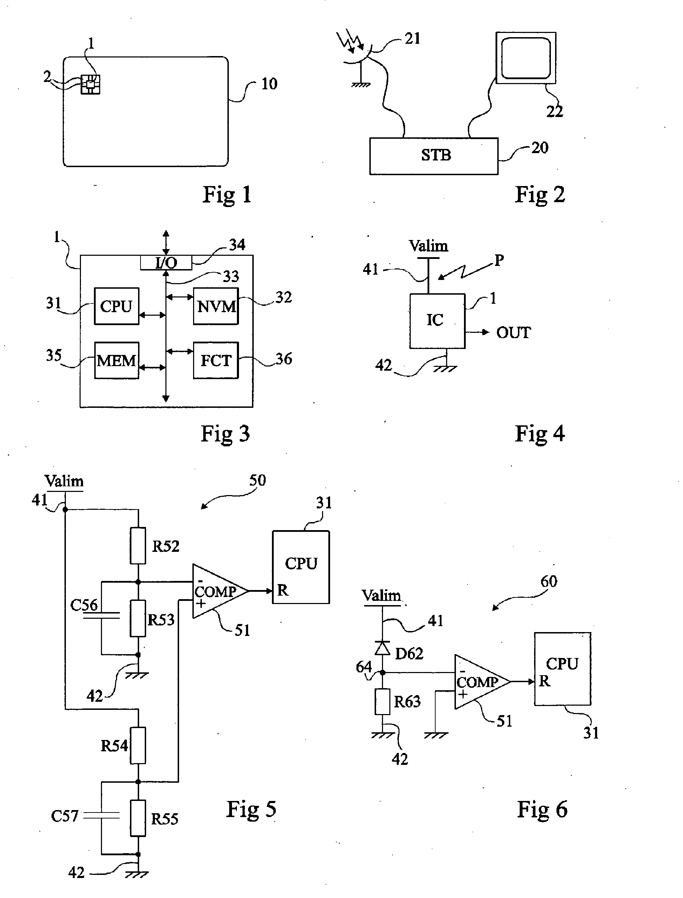

La figure 1 représente, de façon très schématique, une carte à puce 10 du type auquel s'applique à titre d'exemple la présente invention. Une telle carte est le plus souvent constituée d'un support en matière plastique sur ou dans lequel est rapportée une puce 1 de circuit intégré associée à des contacts 2 de communication avec un terminal (non représenté), ou à des éléments d'émission-réception radiofréquence pour une communication sans contact.

La figure 2 représente, de façon très schématique et sous forme de blocs, un deuxième exemple d'application de la présente invention à un récepteur 20 (STB) de signaux radiodiffusés de façon contrôlée, par exemple, un décodeur de signaux de télévision reçus par une antenne satellite 21 pour affichage sur un écran 22 de type écran de télévision. Le décodage des émissions reçues est subordonné à des droits d'accès gérés par le décodeur 20 (par exemple, de type connu sous la dénomination Set Top Box). Dans certains cas, le décodeur 20 comporte un lecteur de carte à puce 10 du type de celui illustré par la figure 1 dont le circuit intégré 1 contient des droits d'accès (plus précisément un identifiant et généralement une clé de déchiffrement) nécessaires au décodage correct des émissions. Dans d'autres cas, des circuits (non représentés) internes au décodeur 20 comportent des éléments de gestion des droits d'accès (notamment de déchiffrement).

La figure 3 représente, de façon très schématique et sous forme de blocs, un microcontrôleur 1, par exemple d'une carte à puce, auquel s'applique à titre d'exemple la présente invention. Un tel circuit comporte une unité centrale de traitement 31 (CPU) susceptible d'exécuter des programmes le plus souvent contenus dans une mémoire non volatile 32 (NVM), par exemple de type ROM ou EEPROM. Un ou plusieurs bus 33 véhiculent des signaux d'adresses, de commandes et de données entre les différents éléments du circuit 1 et entre tout ou partie de ces éléments et une interface 34 d'entrée/sortie (I/0) pour communiquer avec ou sans contact avec l'extérieur. Le plus souvent, des éléments de mémorisation volatile 35 (MEM) de type RAM et/ou de type registres sont contenus dans le circuit 1. D'autres fonctions (bloc 36, FCT) peuvent également être intégrées au circuit 1 en fonction de l'application. Par exemple, de telles fonctions peuvent comporter une cellule de chiffrement, une cellule de vérification d'intégrité, etc.

Le circuit 10 manipule des quantités numériques (qu'il s'agisse d'instructions de programme ou de données) qui, dans les applications que vise la présente invention, conditionnent l'accès à certaines informations (par exemple, des programmes à télédiffuser). Il peut s'agir de clés secrètes d'algorithmes de chiffrement, de codes secrets d'authentification, d'étapes d'algorithmes d'un programme, etc.

Différente attaques sont susceptibles d'être mises en oeuvre pour tenter de percer les secrets du circuit intégré ou de rendre inopérante une protection de données traitées, en examinant des signaux d'entrée-sortie et/ou la consommation du circuit, ou toute autre grandeur influencée par son fonctionnement. En particulier, des attaques dites par injection de fautes consistent à provoquer une perturbation dans le fonctionnement du circuit intégré 1 lors de l'exécution d'un algorithme de cryptographie ou de décodage, et à interpréter son fonctionnement ultérieur pour tenter de découvrir les quantités secrètes. Plus simplement, la perturbation peut engendrer un saut dans un programme visant à ne pas exécuter des instructions susceptibles d'interdire l'accès à des données.

La figure 4 illustre de façon très schématique la perturbation la plus répandue dans les attaques par injection de faute. Cette figure représente un circuit intégré 1 (IC) alimenté, entre deux bornes 41 et 42, par une tension Valim et fournissant au moins un résultat sur une borne de sortie OUT. Une perturbation P sur l'alimentation du circuit 1 consiste à provoquer un pic parasite dans l'alimentation du circuit.

Pour tenter de contrer de telles attaques, les circuits intégrés comportent des outils (contre-mesures) logiciels et/ou matériels réagissant à une perturbation dans le fonctionnement du circuit, de façon à bloquer son fonctionnement, empêcher la sortie d'informations confidentielles, rendre inexploitable un résultat d'un calcul, etc., lorsqu'une tentative de fraude est détectée.

Parmi ces outils, la présente invention concerne plus particulièrement les détecteurs matériels de perturbation de l'alimentation d'un circuit, par exemple, agissant directement sur le circuit en réinitialisant l'unité centrale interdisant ainsi au pirate éventuel de tirer profit de la perturbation. Le besoin de tels détecteurs de pics parasites d'alimentation provient notamment de l'imperfection des régulateurs de tension dont sont le plus souvent équipés les circuits électroniques, les besoins de miniaturisation empêchant d'utiliser des condensateurs de filtrage de taille suffisante.

La figure 5 représente, de façon très schématique, un premier exemple classique de circuit 50 de détection de pics parasites dans l'alimentation d'un circuit électronique. Ce détecteur est basé sur un comparateur de tension 51 (COMP) dont les deux entrées reçoivent une tension proportionnelle à la tension d'alimentation Valim après filtrage par des circuits résistifs et capacitifs présentant des constantes de temps différentes. Des diviseurs de tension (résistances R52 et R53 en série et résistances R54 et R55 en série) entre une borne 41 d'application de la tension Valim et la masse 42 sont couplés aux deux bornes d'entrée (- et +) du comparateur 51, un condensateur C56, respectivement C57, reliant l'entrée correspondante du comparateur (point milieu du pont résistif associé) à la masse 42 pour constituer la cellule de filtrage. La sortie du comparateur 51 est reliée, le cas échéant en traversant un élément adaptateur de niveaux non représenté, à une borne R de réinitialisation de l'unité centrale 31. Le circuit de la figure 5 est décrit, par exemple, dans le document US-A-2003/0226082. Les valeurs données aux cellules de filtrage définissent des constantes de temps différentes pour détecter des parasites d'alimentation.

La figure 6 représente, de façon très schématique, un deuxième exemple classique de circuit 60 de détection de pics parasites dans l'alimentation d'un circuit électronique. On retrouve un comparateur 61 déclenchant une réinitialisation de l'unité centrale 31. Le détecteur de la figure 6 est basé sur l'utilisation d'une diode D62 en série avec une résistance R63 entre la borne 41 d'application de la tension Valim et la masse 42, le point milieu 64 de cette association en série étant relié à une borne d'entrée (par exemple, inverseuse (-)) du comparateur 61, l'autre borne (+) du comparateur étant à la masse. L'anode de la diode D62 est reliée au point milieu 64. Le circuit de la figure 6 détecte des pics entraînant une inversion de polarité entre les bornes 41 et 42 pour réinitialiser l'unité centrale 31. Par rapport au circuit de la figure 5, le détecteur 60 de la figure 6 ne fonctionne que pour des pics à inversion de polarité mais permet une détection de pics de durée plus courte.

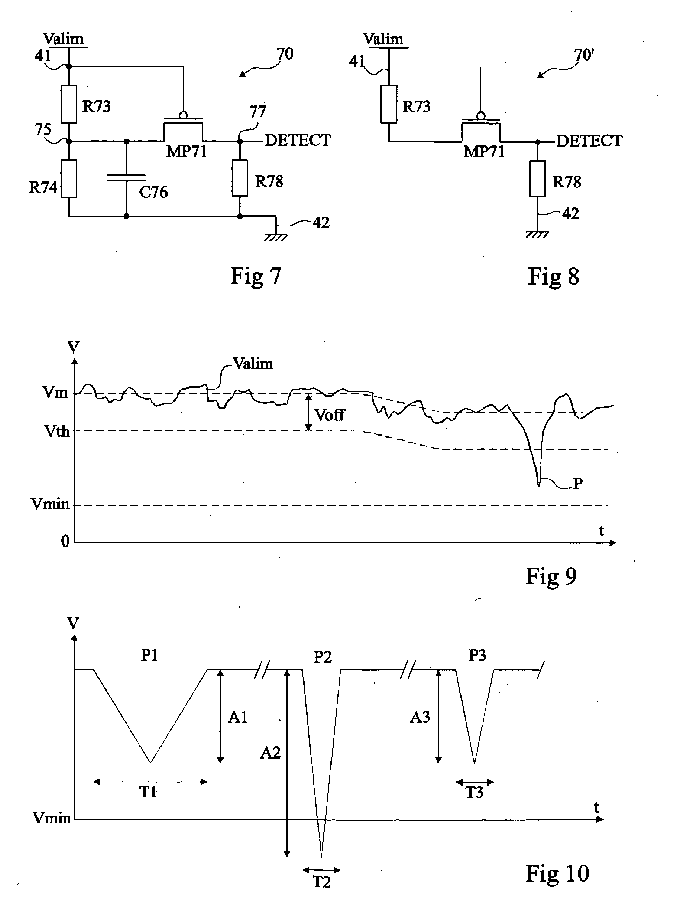

La figure 7 représente un autre exemple amélioré de circuit 70 de détection de pics parasites. Un transistor MOS MP71 à canal P sert de comparateur de la tension supposée positive Valim appliquée entre une borne positive 41 et une borne de masse 42 par rapport à une valeur moyenne Vm de la tension Valim minorée d'une tension de décalage Voff. Un pont diviseur, constitué dans cet exemple de deux éléments résistifs R73 et R74 en série entre les bornes 41 et 42 a son point milieu 75 relié à la source du transistor MP71, un élément capacitif C76 reliant ce point milieu à la masse 42. Fonctionnellement, le point 75 correspond à une sortie de filtre passe-bas tandis que la grille du transistor MP71 représente une première entrée (inverseuse) d'un comparateur dont l'entrée non inverseuse est constituée par sa source. Le drain 77 du transistor MP71 est de préférence relié par une source de courant (ici, une résistance R78) à la masse et constitue la borne de sortie du circuit 70. La tension aux bornes de la résistance R78 représente le signal DETECT de détection. Ce signal est un signal en tout ou rien. Le rôle de la résistance R78 est de fournir, à ses bornes, une tension représentative de la détection en tirant une partie du courant vers la masse (pull-down).

Le transistor MP71 est passant lorsque la tension Valim bruitée, diminuée de la valeur moyenne Vm fixée par les éléments R73 et C76, devient supérieure ou égale à la valeur absolue de la tension seuil Vt du transistor MP71. Le décalage (Voff) par rapport au niveau moyenné (Vm) est, en première approximation, fixé par les résistances R73 et R74 et par la tension seuil Vt ($Voff = (R1*Valim)/(R73+R74) + |Vt|$, où $|Vt|$ représente la valeur absolue de la tension Vt).

La condition sur la conduction du transistor MP71 est réglable par la résistance R74. Plus la valeur de la résistance R74 est élevée, plus la tension de décalage Voff est faible. La résistance R78 peut être remplacée par une source de courant active pourvu que sa résistance équivalente soit supérieure à la valeur de la résistance R73 afin de ne pas absorber les pics parasites à détecter.

Un montage similaire peut être réalisé pour une détection de pics parasites positifs en remplaçant le transistor à canal P MP71 par un transistor à canal N, le reste du montage étant identique. Selon une autre variante, les bornes 41 et 42 ne voient pas directement la tension d'alimentation du circuit intégré mais une tension réduite, le point 41 correspondant par exemple au point milieu d'un diviseur résistif.

La figure 8 représente un deuxième exemple de réalisation d'un détecteur de pics parasites négatifs basé sur le même principe que le détecteur 70' de la figure 7. Par rapport à la figure 7, la résistance R74 a été supprimée, évitant ainsi toute consommation au repos, le condensateur C76 a également été supprimé, la capacité parasite source-substrat du transistor MP71 jouant un rôle similaire. La tension de décalage d'un tel montage est ici non seulement fonction de la valeur de résistance R73 et de la tension seuil Vt du transistor MP71, mais également de son rapport largeur/longueur de grille et de la valeur de la source de courant de sortie R78 dont les effets ne peuvent plus être négligés.

Il serait souhaitable de pouvoir qualifier un circuit intégré dans sa résistance aux attaques par injection de pics parasites d'alimentation.

Il serait également souhaitable de pouvoir déterminer le type de détecteur équipant le circuit sans qu'il soit nécessaire d'effectuer des investigations approfondies du circuit intégrant le détecteur (reverse engineering).

<u>Résumé de l'invention</u>

La présente invention vise à déterminer si un circuit intégré est équipé d'un détecteur de pics parasites d'alimentation.

L'invention vise plus particulièrement à permettre une qualification d'un circuit intégré comportant un tel détecteur, sans qu'il soit nécessaire d'effectuer des investigations et analyses à l'intérieur du circuit.

L'invention vise également une solution fournissant une information sur les performances du détecteur éventuel que comporte le circuit.

Pour atteindre tout ou partie de ces objets ainsi que d'autres, la présente invention prévoit un procédé de détection du type de détecteur de pics parasites d'alimentation selon la revendication 1.

Selon un mode de mise en oeuvre de la présente invention, lesdites étapes sont reproduites sous au moins une deuxième tension d'alimentation du circuit avec un deuxième pic parasite différent du premier.

Selon un mode de mise en oeuvre de la présente invention, ladite deuxième tension est inférieure à la première.

Selon un mode de mise en oeuvre de la présente invention, les détecteurs à qualifier sont répartis en trois catégories selon qu'ils comportent :

un comparateur différentiel d'une valeur moyenne de la tension par rapport à un seuil ;
un comparateur différentiel d'une inversion instantanée de la polarité de la tension d'alimentation ; ou
un comparateur d'une valeur instantanée de la tension d'alimentation par rapport à un seuil de même polarité.

Selon un mode de mise en oeuvre de la présente invention, l'amplitude du pic parasite est choisie pour préserver une tension minimale d'alimentation d'étages différentiels du circuit à tester.

Selon un mode de mise en oeuvre de la présente invention, les première et deuxième tensions d'alimentation sont choisies en fonction de la plage de tensions d'alimentation acceptable par le circuit intégré.

Selon un mode de mise en oeuvre de la présente invention, les amplitudes respectives des premier et deuxième pics sont choisies en fonction de la tension d'alimentation courante du circuit intégré et de la tension seuil de transistors qu'il contient.

Selon un mode de mise en oeuvre de la présente invention, les durées respectives des premier et deuxième pics sont choisies en fonction de la fréquence de transition de transistors du circuit intégré.

L'invention prévoit également un système de détermination du type de détecteur de pics parasites d'alimentation, selon la revendication 9.

Brève description des dessins

Ces objets, caractéristiques et avantages, ainsi que d'autres de la présente invention seront exposés en détail dans la description suivante de modes de mise en oeuvre et de réalisation particuliers faite à titre non-limitatif en relation avec les figures jointes parmi lesquelles :

la figure 1 décrite précédemment représente une carte à puce du type auquel s'applique à titre d'exemple la présente invention ;
la figure 2 décrite précédemment représente un système de décodeur de signaux de télévision du type auquel s'applique à titre d'exemple la présente invention ;
la figure 3 décrite précédemment représente, de façon très schématique et sous forme de blocs, un exemple de circuit intégré du type auquel s'applique la présente invention ;
la figure 4 décrite précédemment illustre le problème posé pour détecter un pic parasite sur l'alimentation d'un circuit intégré ;
la figure 5 décrite précédemment représente un premier exemple classique de détecteur de pics parasites ;
la figure 6 décrite précédemment représente un deuxième exemple classique de détecteur de pics parasites ;
la figure 7 décrite précédemment représente un troisième exemple de détecteur de pics parasites ;
la figure 8 décrite précédemment représente un quatrième exemple de détecteur de pics parasites ;
la figure 9 est un chronogramme illustrant le fonctionnement de détecteurs de pics parasites ;
la figure 10 représente une classification selon un mode de mise en oeuvre de l'invention de pics parasites d'alimentation susceptibles d'être détectés ;
la figure 11 représente, sous forme de schémas blocs, un mode de mise en oeuvre du procédé de qualification d'un circuit intégré selon la présente invention ; et
la figure 12 représente, de façon très schématique et sous forme de blocs, un mode de réalisation d'un système de qualification d'un circuit intégré selon la présente invention.

De mêmes éléments ont été désignés par les mêmes références aux différentes figures. Par souci de clarté, seuls les étapes et éléments utiles à la compréhension de l'invention ont été représentés et seront décrits. En particulier, l'exploitation faite par un circuit intégré d'une détection d'un pic parasite sur son alimentation n'a pas été détaillée, l'invention étant compatible avec tout système de contre-mesure.

Description détaillée

La présente invention tire son origine d'une interprétation du fonctionnement des différents types de détecteurs de pics parasites sur l'alimentation d'un circuit intégré en termes d'amplitude et de durée du pic.

La figure 9 est un chronogramme schématique d'allures de tensions en fonction du temps illustrant le fonctionnement des détecteurs des figures 5 à 8. En figure 9, un exemple arbitraire d'allure bruitée de la tension Valim a été représenté ainsi que sa valeur moyenne Vm exploitée par les montages des figures 7 et 8. Un seuil de détection Vth a également été représenté décalé d'une amplitude Voff par rapport à la valeur moyenne Vm.

Le fait d'appliquer un décalage approximativement constant entre la valeur moyenne Vm et le seuil Vth de détection comme cela est prévu par les montages des figure 5, 7 et 8 permet de s'affranchir des variations lentes de la tension d'alimentation qui ne doivent pas être prises pour des parasites, ce qui risquerait d'être le cas avec un seuil constant.

Une différence entre le montage de la figure 5 et les montages des figures 7 et 8 est la possibilité pour ces derniers de détecter des pics P plus brefs qui ne sont pas détectés par le montage de la figure 5. En effet, le montage de la figure 5 compare la valeur moyenne Vm par rapport au seuil Vth alors que les montages des figures 7 et 8 comparent la valeur instantanée Valim par rapport à la valeur seuil Vth.

Quant au montage de la figure 6, celui-ci n'est capable de détecter que des pics provoquant une inversion de la tension d'alimentation ou des pics de forte amplitude atteignant une tension minimale Vmin de fonctionnement du comparateur 61.

La figure 10 est un chronogramme schématique illustrant trois gabarits de pics parasites P1, P2 et P3 sur une tension V.

Un premier pic P1 est d'amplitude A1 et de durée T1. Un deuxième pic P2 est d'amplitude A2 et de durée T2. L'amplitude A2 est telle qu'elle inverse la tension d'alimentation du circuit (amplitude coupant le niveau de tension minimal Vmin) et la durée T2 est inférieure, dans un rapport d'au moins trois, à la durée T1. Un troisième pic P3 d'amplitude A3 et de durée T3 représente une troisième catégorie de pics parasites, la durée T3 étant du même ordre de grandeur que la durée T2 et l'amplitude A3, de même ordre de grandeur que l'amplitude A1, n'atteignant pas le niveau Vmin.

Les trois pics P1, P2 et P3 de la figure 10 peuvent être considérés comme des gabarits limite de pics détectables pour déterminer la présence d'un détecteur dans un circuit intégré et qualifier ce détecteur.

Un détecteur susceptible de détecter uniquement le pic P1 et ne détectant ni les pics P2 et P3 est considéré comme appartenant à une première catégorie, typiquement représentée en figure 5, c'est-à-dire mesurant une valeur moyennée de la tension d'alimentation par rapport à un seuil.

Un détecteur détectant uniquement un pic P2, d'amplitude suffisante pour inverser la tension d'alimentation du circuit intégré ou à tout le moins descendre en dessous d'une tension minimale de fonctionnement d'un comparateur dans la technologie de ce circuit, est considéré comme appartenant à une deuxième catégorie correspondant au détecteur de la figure 6, c'est-à-dire, de type à diode.

Un détecteur capable de détecter les trois pics P1, P2 et P3 appartient à une troisième catégorie, regroupant les détecteurs des figures 7 et 8.

L'examen de la détection d'un pic parasite par un détecteur est selon l'invention effectué en vérifiant si le circuit intégré réagit suite à l'apparition d'au moins un pic parasite. Cette réaction est déterminée par comparaison de la consommation ou du courant moyen consommé par le circuit avant et après l'envoi du pic parasite par un système de qualification. Si le circuit a détecté le pic, la contre-mesure qu'il met en oeuvre provoque forcément une modification du courant moyen consommé, qu'il s'agisse d'une réinitialisation interne au détecteur ou de tout autre contre-mesure.

Les inventeurs ont par ailleurs constaté que la capacité de détection des pics parasites par un détecteur dépend, pour les détecteurs des première et deuxième catégories utilisant un comparateur sous forme d'amplificateur différentiel, de la tension d'alimentation. En effet, la tension d'alimentation conditionne la performance en vitesse (fréquence de transition) des commutateurs du circuit intégré et en particulier la pente des étages différentiels qu'il comporte. Cette tension d'alimentation conditionne donc la vitesse des détecteurs réalisés sous la forme d'amplificateurs (première et deuxième catégories des figures 5 et 6). Pour ces détecteurs, un pic de même durée peut être détecté ou non selon la tension d'alimentation du circuit. Par contre, pourvu que la tension d'alimentation soit suffisante au fonctionnement du circuit intégré, les détecteurs de la troisième catégorie fonctionnent.

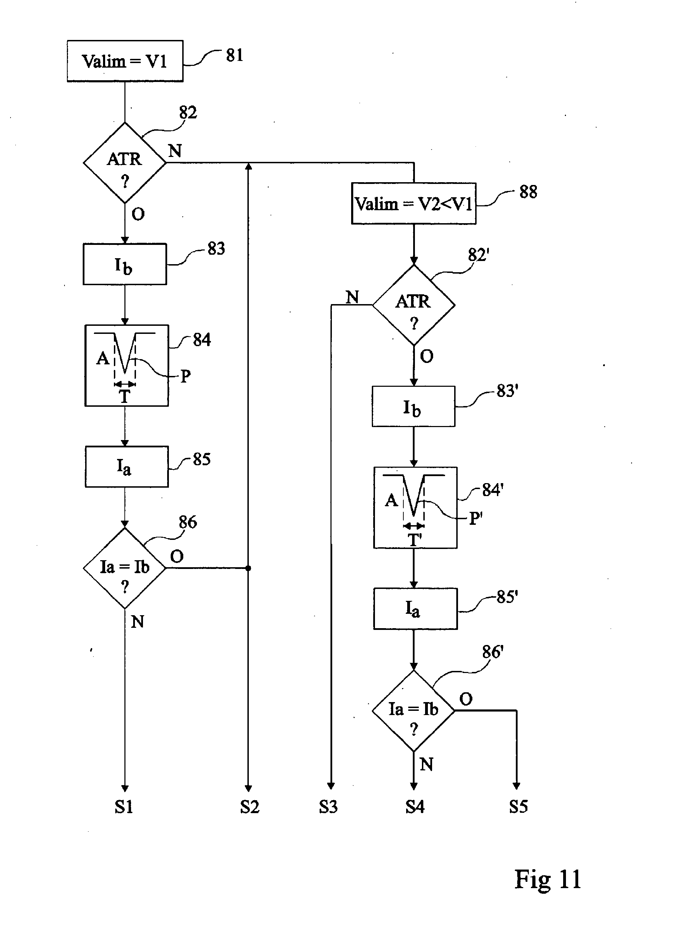

La figure 11 est un schéma bloc fonctionnel illustrant un mode de mise en oeuvre préféré du procédé de qualification de l'invention. Dans l'exposé qui suit, on suppose connaître les caractéristiques des circuits intégrés au moins en termes de fréquence de transition par rapport à la tension d'alimentation. Ces caractéristiques dépendent de la technologie et un mode préféré d'estimation sera donné ultérieurement. Cela revient à dire que l'on suppose connus, pour la technologie du circuit, les gabarits limite P1, P2 et P3.

Un circuit à qualifier est alimenté (bloc 81, Valim=V1) par une première tension V1.

Une première étape (bloc 82, ATR ?) consiste à vérifier si la tension d'alimentation V1 est suffisante pour la mise en route du circuit. Pour cela, une commande ou un stimulus auquel est censé répondre le circuit à tester lui est envoyé. Par exemple, il s'agit de vérifier que le circuit fournit sur ses ports d'entrée/sortie une réponse à réinitialisation (ATR ou Answer To Reset). Il peut également s'agir de vérifier la connexion d'un périphérique USB.

Si le test 82 est positif (sortie O, du bloc 82), le système mesure et mémorise (bloc 83, Ib) le courant moyen Ib du circuit avant perturbation.

Puis (bloc 84), le système envoie sur l'alimentation du circuit à tester un pic parasite P d'amplitude A et de durée T. Dans l'exemple, on suppose l'envoi d'un pic parasite négatif sur une tension d'alimentation positive. L'inverse est bien entendu possible et se comprendra aisément de la description qui suit. L'amplitude A est choisie pour, sous la tension V1, ne pas atteindre le niveau minimal de tension qui serait détecté comme une inversion (par exemple, A=A1=A3). La durée T est choisie pour, sous la tension V1, être détectable par les détecteurs de première catégorie (T=T1).

Le système mesure alors (bloc 85, Ia) et mémorise le courant moyen Ia après le pic parasite, afin de déterminer si le circuit a réagi à ce pic grâce à son détecteur éventuel.

Puis, le système compare (bloc 86, Ia=Ib ?) les courants moyens avant et après le pic. La constante de temps d'intégration de la valeur moyenne du courant est choisie pour être supérieure à la durée maximale des pics à simuler.

Si le circuit ne modifie pas son fonctionnement (sortie N du test 86), cela signifie (drapeau S1 actif) soit que le circuit intégré est dépourvu de détecteur de pics parasites, soit qu'il possède un détecteur de deuxième catégorie. Dans le cas contraire (sortie O du test 86), cela veut dire (drapeau S2 actif) que le circuit possède un détecteur de la première ou troisième catégorie.

Le test est reconduit pour une deuxième tension d'alimentation V2 inférieure à la première (bloc 88, Valim=V2<V1). Ce deuxième test est également effectué en cas de sortie négative du test 82.

Des étapes 82', 83', 84', 85' et 86', similaires aux étapes 82 à 86 sont alors effectuées sous la tension d'alimentation V2. Dans le cas où le circuit ne se met pas en route, le test de qualification s'arrête (drapeau S3 actif) et les résultats sont interprétés.

Si le circuit s'est mis en route sous la deuxième tension V2, la comparaison des courants moyens avant et après un deuxième pic P' (bloc 86') affine la détection de la première exécution. Par exemple, le pic P' est choisi pour, sous la tension V2, être d'une durée insuffisante pour être détecté par les détecteurs des première et deuxième catégories. Il respecte par exemple le gabarit (A'=A3, T'=T3) de la troisième catégorie.

En cas de détection positive (sortie O) du bloc 86, cela signifie (drapeau S5 actif) que le détecteur est de la troisième catégorie. En cas de sortie négative du bloc 86 (drapeau S4 actif), cela signifie qu'il appartient à la première catégorie.

En supposant les niveaux S1 à S5 actif à l'état 1, les résultats peuvent être interprétés de la façon illustrée par le tableau I ci-dessous. Dans cet exemple, on suppose un pic P (bloc 84) choisi pour, sous la tension V1, être d'amplitude A=A1=A3 et de durée T=T1, et un pic P' (bloc 84') choisi pour, sous la tension V2, être d'amplitude A'=A1=A3 et de durée T=T3. Les états ci-dessous doivent bien entendu être adaptés si certains drapeaux ont un niveau de repos à l'état 1.

| Tableau I | | | | | |
|---|---|---|---|---|---|
| S1 | S2 | S3 | S4 | S5 | Catégorie de détecteur |
| 0 | 0 | 0 | 0 | 0 | Pas de détecteur |
| 0 | 0 | 1 | 0 | 0 | Tensions mal choisies |
| 1 | 0 | 0 | 0 | 0 | Aucun ou catégorie 2 |
| 0 | 1 | 1 | 0 | 0 | Tension V2 insuffisante, catégorie 1 ou 3 sous V1 |
| 0 | 1 | 0 | 1 | 0 | Catégorie 1 |
| 0 | 1 | 0 | 0 | 1 | Catégorie 3 |

Selon une première variante de réalisation, les étapes 83 à 86, sous la tension V1, sont effectuées une deuxième fois avec un gabarit de pic P2 (A=A2, T=T2) pour différencier une absence de détecteur d'un détecteur de deuxième catégorie.

Selon une autre variante, le procédé de la figure 11 est mis en oeuvre avec des pic P et P' ayant respectivement des amplitudes A=A2 et A'=A3 et des durées T=T2=T3 et T'=T2=T3. Le tableau II ci-dessous donne alors un exemple d'interprétation des résultats.

| Tableau II | | | | | |
|---|---|---|---|---|---|
| S1 | S2 | S3 | S4 | S5 | Catégorie de détecteur |
| 0 | 0 | 1 | 0 | 0 | Tensions mal choisies |
| 1 | 0 | 0 | 0 | 0 | Aucun ou catégorie 1 |
| 0 | 1 | 1 | 0 | 0 | Tension V2 insuffisante, catégorie 2 ou 3 sous V1 |
| 0 | 1 | 0 | 1 | 0 | Catégorie 2 |
| 0 | 1 | 0 | 0 | 1 | Catégorie 3 |

Dans cette variante, une exécution supplémentaire des étapes 83 à 86 avec un pic de gabarit P1 permet de lever l'incertitude sur l'existence d'un détecteur de première catégorie.

La présente invention permet de détecter la présence, dans un circuit intégré, d'un détecteur de pics parasites et, avec un nombre réduit de tests, de qualifier ce détecteur en fonction de sa sensibilité.

Un autre avantage de la présente invention est qu'elle évite toute intervention de reverse engineering à l'intérieur du circuit.

Différentes variantes peuvent être prévues pour affiner la détection ou qualifier cette détection sous plus de deux tensions d'alimentation. A l'extrême, pour chaque tension d'alimentation, des pics parasites respectant les différents gabarits sont successivement appliqués.

Selon une autre variante de réalisation, les tensions d'alimentation V1 et V2 sont inversées c'est-à-dire que l'on commence par effectuer un test sous une tension relativement faible, puis sous une tension relativement élevée.

L'amplitude et la durée des pics parasites envoyés par le système de test sont choisies préférentiellement en fonction de la tenue en tension des transistors constitutifs du circuit.

Technologiquement, cette tenue en tension est fixée par l'épaisseur d'oxyde de grille des différents transistors MOS du montage et par leur résistance drain/source.

En notant Mu la mobilité électrique, Vt la tension de seuil des transistors, Lmin la longueur minimale du transistor connectable sur l'alimentation Valim, la fréquence de transition Ft0 est donnée par la relation :

$$\text{Ft0 = Mu.(Valim-Vt)/(2}\pi\text{.Lmin}^2\text{).}$$

exemple choisies pour que :

$$\text{A = Valim ;}$$

$$\text{A' = Valim-Vt ;}$$

$$\text{T = (Ft0+K)/(Ft0.K) ;}$$

et

$$\text{T' = (Ft0+K')/(Ft0.K'),}$$

où K et K' valent respectivement $4.10^8$ Hz et $2.10^7$ Hz et sont choisies en fonction des éléments parasites des circuits de détection et de la consommation souhaitée. Ces valeurs définissent les valeurs limite permettant de différencier les détecteurs.

A titre d'exemple particulier de réalisation, avec Mu = $3.10^{10}$ $\mu$m²/V.s, Valim = 5 V, Vt = 0,65 V, Lmin = 1 $\mu$m, on obtient une fréquence Ft0 d'environ 20 GHz et des durées T et T' respectivement de 2,55 ns et 50 ns.

Selon un exemple particulier de réalisation de l'invention appliqué à des circuits intégrés susceptibles de fonctionner sous des tensions d'alimentation V1 de 5,5 volts et V2 3,3 volts, les pics envoyés par le système de qualification ont des durées respectives T de 10 nanosecondes et T' de 40 ns avec des amplitudes respectives A et A' d'environ 4 V et 2,3 V.

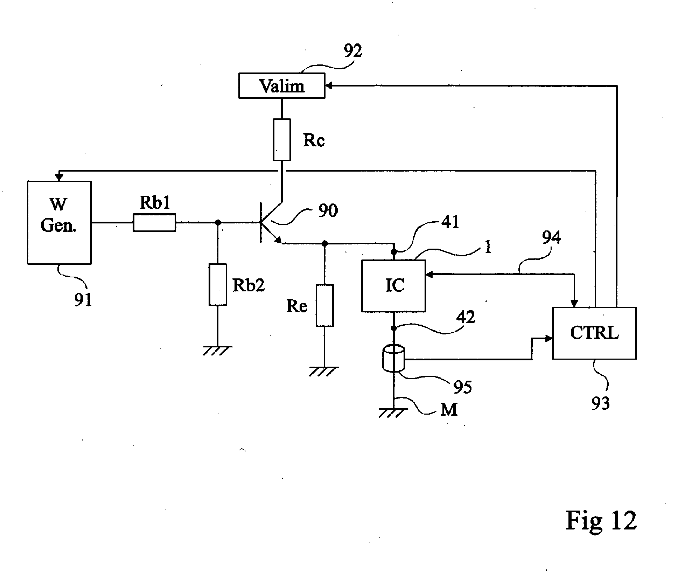

La figure 12 représente, de façon très schématique et sous forme de blocs, un mode de réalisation d'un système de qualification selon la présente invention. Un circuit 1 à tester (IC) est connecté au système par ses bornes d'application d'une tension d'alimentation. La tension d'alimentation Valim (bloc 92, Valim) est appliquée au circuit intégré 1 par l'intermédiaire d'un transistor 90 (par exemple, un transistor bipolaire de type NPN) dont l'émetteur est relié à la borne 41 et dont le collecteur est relié, par une résistance Rc, à une borne d'application de la tension d'alimentation, l'émetteur du transistor étant par ailleurs relié, par une résistance Re, à la masse. Un générateur d'onde 91 (W Gen.) a sa sortie reliée, par une résistance Rb1, à la base du transistor 90, cette base étant également reliée, par une résistance Rb2, à la masse. Le générateur 91 et le bloc 92 de fourniture de la tension d'alimentation sont commandés par un circuit 93 (CTRL) également relié (liaison 94) d'une part au circuit 1 pour vérifier sa mise en route suite à l'alimentation, et d'autre part à un détecteur de courant moyen 95 placé par exemple entre la borne 42 et la masse M d'application de la tension d'alimentation Valim.

Au repos, en l'absence d'ondes envoyées par le générateur 91, le circuit est alimenté, le transistor 90 étant passant. La présence d'une onde générée par le générateur 91 provoque une ouverture brusque du transistor 90, donc un pic sur l'alimentation du circuit 1. Le détecteur de courant 95 permet d'exploiter des mesures moyennes de ce courant avant et après l'apparition du pic parasite.

Pour le cas où un pic du gabarit P2 doit être appliqué par le système, l'émetteur du transistor 90 est alors relié à une borne (non représentée) d'application d'un potentiel négatif à laquelle est également reliée la résistance Rb2 par sa borne opposée à celle connectée à la base du transistor 90. La borne 41 du circuit 1 est par ailleurs raccordée, de même que la résistance Re, au collecteur du transistor plutôt qu'à son émetteur.

Bien entendu, la présente invention est susceptible de diverses variantes et modifications qui apparaîtront à l'homme de l'art. En particulier, bien que l'invention ait été décrite en relation avec un exemple de détecteurs de pics négatifs sur une alimentation positive, elle se transpose sans difficulté à des détecteurs de pics positifs sur des alimentations négatives ainsi qu'à des détecteurs de pics positifs respectivement négatifs sur des alimentations positives respectivement négatives. De plus, la mise en oeuvre pratique de l'invention à partir des indications fonctionnelles données ci-dessus est à la portée de l'homme du métier en utilisant des outils matériels et/ou logiciels disponibles. En particulier, d'autres circuits de test que celui de la figure 12 sont envisageables.

**Revendications**

1.   Procédé de détection du type de détecteur (50, 60, 70, 70') de pics parasites d'alimentation équipant un circuit intégré, caractérisé au moins par des étapes :

> d'alimentation (81) du circuit intégré à tester sous au moins une première tension (V1) ;
> de vérification (82) d'une mise en route du circuit ;
> d'application (84) d'au moins un premier pic parasite (P) sur l'alimentation du circuit, en respectant un gabarit d'amplitude et de durée ; et
> de comparaison (86) de courants moyens consommés par le circuit avant et après le pic.

2.   Procédé selon la revendication 1, dans lequel lesdites étapes sont reproduites (82', 84', 86') sous au moins une deuxième tension d'alimentation (88) du circuit avec un deuxième pic parasite (P') différent du premier.

3.   Procédé selon la revendication 2, dans lequel ladite deuxième tension (V2) est inférieure à la première (V1).

4.   Procédé selon l'une quelconque des revendications 1 à 3, dans lequel les détecteurs (50, 60, 70, 70') à qualifier sont répartis en trois catégories selon qu'ils comportent :

> un comparateur différentiel (51) d'une valeur moyenne de la tension par rapport à un seuil ;
> un comparateur différentiel (61) d'une inversion instantanée de la polarité de la tension d'alimentation ; ou
> un comparateur (MP71) d'une valeur instantanée de la tension d'alimentation par rapport à un seuil de même polarité.

5.   Procédé selon l'une quelconque des revendications 1 et 4, dans lequel l'amplitude du pic parasite (P, P') est choisie pour préserver une tension minimale d'alimentation d'étages différentiels du circuit à tester.

6.   Procédé selon l'une quelconque des revendications 1 à 5, dans lequel les première et deuxième tensions d'alimentation (V1, V2) sont choisies en fonction de la plage de tensions d'alimentation acceptable par le circuit intégré.

**7.** Procédé selon la revendication 6, dans lequel les amplitudes respectives (A, A') des premier et deuxième pics (P, P') sont choisies en fonction de la tension d'alimentation courante (Valim) du circuit intégré et de la tension seuil de transistors qu'il contient.

**8.** Procédé selon la revendication 7, dans lequel les durées respectives (T, T') des premier et deuxième pics (P, P') sont choisies en fonction de la fréquence de transition des transistors du circuit intégré.

**9.** Système de détermination du type de détecteur de pics parasites d'alimentation équipant un circuit intégré, comportant :

des moyens commandables (92) d'alimentation du circuit intégré ;
des moyens (95) de mesure de la consommation du circuit ;
des moyens (93) de mémorisation de la consommation mesurée,
**caractérisés en ce qu'**il comporte :

des moyens commandables (91) de génération d'au moins un pic parasite respectant un gabarit d'amplitude et de durée ; et
une unité (93) de commande et de synchronisation des différents éléments, adaptée à la mise en oeuvre du procédé selon l'une quelconque des revendications 1 à 8.

**Claims**

**1.** A method for detecting the type of parasitic supply peak detector (50, 60, 70, 70') used in an integrated circuit, comprising at least steps of:

supply (81) of the integrated circuit to be tested under at least a first voltage (V1);
checking (82) of a starting of the circuit;
application (84) of at least one first parasitic peak (P) on the circuit power supply, while respecting an amplitude and time gauge; and
comparison (86) of average currents consumed by the circuit before and after the peak.

**2.** The method of claim 1, wherein said steps are reproduced (82', 84', 86') under at least a second circuit supply voltage (88) with a second parasitic peak (P') different from the first one.

**3.** The method of claim 2, wherein said second voltage (V2) is smaller than the first one (V1).

**4.** The method of any of claims 1 to 3, wherein the detectors (50, 60, 70, 70') to be qualified are distributed in three categories according to whether they comprise:

a differential comparator (51) of an average value of the voltage with respect to a threshold;
a differential comparator (61) of an instantaneous reversal of the polarity of the supply voltage; or
a comparator (MP71) of an instantaneous value of the supply voltage with respect to a threshold of same polarity.

**5.** The method of any of claims 1 to 4, wherein the amplitude of the parasitic peak (P, P') is selected to maintain a minimum voltage of supply of differential stages of the circuit to be tested.

**6.** The method of any of claims 1 to 5, wherein the first and second supply voltages (V1, V2) are selected according to the supply voltage range acceptable by the integrated circuit.

**7.** The method of claim 6, wherein the respective amplitudes (A, A') of the first and second peaks (P, P') are selected according to the current supply voltage (Valim) of the integrated circuit and to the threshold voltage of transistors that it contains.

**8.** The method of claim 7, wherein the respective durations (T, T') of the first and second peaks (P, P') are selected according to the transition frequency of the integrated circuit transistors.

**9.** A system for determining the type of parasitic supply peak detector used in an integrated circuit, comprising:

controllable means (92) for supplying the integrated circuit;
means (95) for measuring the circuit consumption;
means (93) for memorizing the measured consumption;
**characterized in that** it comprises:

controllable means (91) for generating at least one parasitic peak respecting an amplitude and time gauge; and

a unit (93) of control and synchronization of the different elements, adapted to the implementation of the method of any of claims 1 to 8.

**Patentansprüche**

1. Ein Verfahren zum Detektieren des Typs eines Detektors (50, 60, 70, 70') von parasitären Versorgungsspitzen, genutzt in einer integrierten Schaltung, wobei das Verfahren wenigstens die folgenden Schritte aufweist:

Versorgen (81) der integrierten Schaltung, die unter wenigstens einer ersten Spannung (V1) zu testen ist;
Prüfen (82) eines Starts der Schaltung;
Anlegen (84) von wenigstens einer ersten Rauschspitze bzw. parasitären Spitze (P) auf der Schaltungsleistungsversorgung, wobei eine Amplituden- und Zeitschablone respektiert wird; und
Vergleichen (86) von durchschnittlichen Strömen, verbraucht durch die Schaltung vor und nach der Spitze.

2. Verfahren nach Anspruch 1, wobei die Schritte reproduziert (82', 84', 86') werden unter wenigstens einer zweiten Schaltungsversorgungsspannung (88) mit einer zweiten Rauschspitze (P'), die unterschiedlich von der ersten ist.

3. Verfahren nach Anspruch 2, wobei die zweite Spannung (V2) kleiner als die erste (V1) ist.

4. Verfahren nach irgendeinem der Ansprüche 1 bis 3, wobei die Detektoren (50, 60, 70, 70'), die zu qualifizieren sind, in drei Kategorien eingeteilt werden und zwar entsprechend, ob sie aufweisen:

einen Differentialkomparator (51) mit einem durchschnittlichen Wert von der Spannung mit Bezug auf eine Schwelle;
einen Differentialkomparator (61) mit einer unmittelbaren Umkehr von der Polarität der Versorgungsspannung; oder
einen Komparator (MP71) mit einem unmittelbaren bzw. Momentanwert von der Versorgungsspannung mit Bezug auf eine Schwelle gleicher Polarität.

5. Verfahren nach irgendeinem der Ansprüche 1 bis 4, wobei die Amplitude von der Rauschspitze (P, P') gewählt wird, um eine minimale Versorgungsspannung von differentiellen Stufen von der zu testenden Schaltung beizubehalten.

6. Verfahren nach irgendeinem der Ansprüche 1 bis 5, wobei die ersten und zweiten Versorgungsspannungen (V1, V2) gemäß dem Versorgungsspannungsbereich gewählt werden, der für die integrierte Schaltung akzeptabel ist.

7. Verfahren nach Anspruch 6, wobei die entsprechenden Amplituden (A, A') von den ersten und zweiten Spitzen (P, P') gewählt werden, gemäß der aktuellen Versorgungsspannung (Valim) von der integrierten Schaltung und der Schwellenspannung von den Transistoren, die sie enthält.

8. Verfahren nach Anspruch 7, wobei die entsprechenden Dauern (T, T') von den ersten und zweiten Spitzen (P, P') gewählt werden, gemäß der Transitfrequenz von den Transistoren der integrierten Schaltung.

9. Ein System zum Bestimmen des Typs eines Detektors von parasitären Versorgungsspitzen genutzt in einer integrierten Schaltung, wobei das System aufweist:

steuerbare Mittel (92) zum Versorgen der integrierten Schaltung;
Mittel (95) zum Messen des Schaltungsverbrauchs;
Mittel (93) zum Speichern des gemessenen Verbrauchs;
**gekennzeichnet dadurch, dass** es aufweist:

steuerbare Mittel (91) zum Erzeugen wenigstens einer Rauschspitze bzw. parasitären Spitze, und zwar eine Amplituden- und Zeitschablone respektierend; und

eine Einheit (93) zum Steuern und Synchronisieren der verschiedenen Elemente, angepasst für die Implementierung von dem Verfahren nach irgendeinem der Ansprüche 1 bis 8.

Fig 1

Fig 2

Fig 3

Fig 4

Fig 5

Fig 6

Fig 7

Fig 8

Fig 9

Fig 10

Fig 11

Fig 12

**EP 1 873 537 B1**

## RÉFÉRENCES CITÉES DANS LA DESCRIPTION

**Documents brevets cités dans la description**

- US 20030226082 A